(19) Europäisches Patentamt
European Patent Office
Office européen des brevets

(11) EP 1 585 142 A1

# (12) EUROPEAN PATENT APPLICATION

(43) Date of publication:
**12.10.2005 Bulletin 2005/41**

(51) Int Cl.[7]: **H01B 1/06**, H01M 10/40, C08F 2/44

(21) Application number: **05006915.2**

(22) Date of filing: **30.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.03.2004 JP 2004105653**

(71) Applicant: **SONY CORPORATION**
**Tokyo (JP)**

(72) Inventors:
- **Uchida, Yuji**
**Shinagawa-ku, Tokyo (JP)**
- **Endo, Takahiro**
**Shinagawa-ku, Tokyo (JP)**
- **Nakamura, Tomoyuki**
**Shinagawa-ku, Tokyo (JP)**

(74) Representative: **Müller - Hoffmann & Partner Patentanwälte,**
**Innere Wiener Strasse 17**
**81667 München (DE)**

## (54) Composition for electrolyte, high molecular weight electrolyte, and battery using it

(57) The invention provides a composition for electrolyte and a high molecular weight electrolyte capable of inhibiting lowering a capacity when a battery is stored in a state of charge, and a battery. The high molecular weight electrolyte contains an electrolytic solution and a high molecular weight compound. The electrolytic solution includes a compound having P-O-Si bond or B-O-Si bond. Thereby, an unreacted polymerizable compound can be inhibited from reacting in the electrode, increase in resistance can be inhibited, and lowering a capacity can be inhibited.

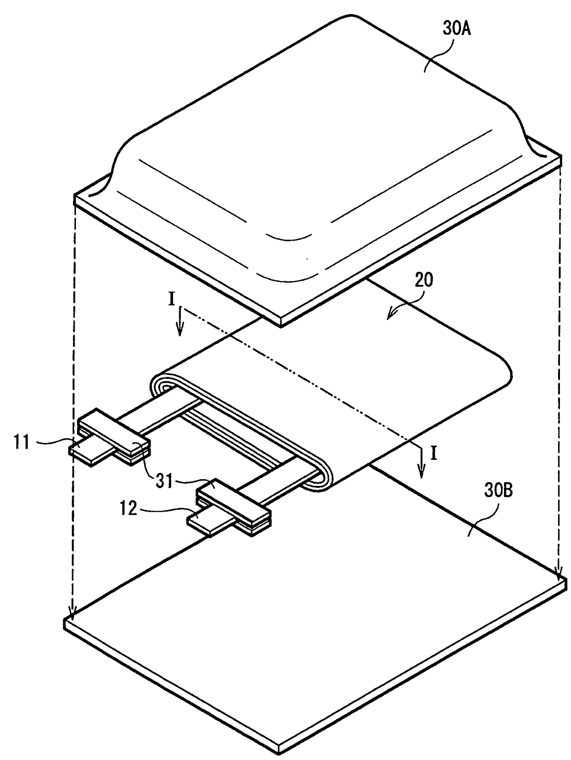


FIG. 1

EP 1 585 142 A1

## Description

BACKGROUND OF THE INVENTION

1. Field of the Invention

The present invention relates to a composition for electrolyte including an electrolytic solution and a polymerizable compound, a high molecular weight electrolyte obtained by polymerizing the composition for electrolyte, and a battery using it.

2. Description of the Related Art

In recent years, many portable electronic devices such as a combination camera (video tape recorder), a mobile phone, and a portable computer have been introduced. Downsizing and weight saving of these devices have been made. Along with these situations, as a portable power source for these electronic devices, development of a battery, in particular, a secondary battery has been actively promoted. Specially, a lithium ion secondary battery attracts attention as a battery capable of realizing a high energy density. Many researches on a thin and foldable lithium ion secondary battery having a high freedom of its shape have been conducted.

For such a battery having a high freedom of its shape, an all solid state high molecular weight electrolyte, in which an electrolyte salt is dissolved in a high molecular weight compound, or a gelatinous high molecular weight electrolyte, in which an electrolytic solution is held in a high molecular weight compound is used. Specially, the gelatinous high molecular weight electrolyte has superior contact characteristics with an active material and superior ion conductivity compared to the all solid state high molecular weight electrolyte, since the gelatinous high molecular weight electrolyte holds the electrolytic solution. Further, the gelatinous high molecular weight electrolyte has a feature that leakage is difficult to be generated compared to an electrolytic solution. Therefore, the gelatinous high molecular weight electrolyte has attracted attention.

As a method to fabricate the gelatinous high molecular weight electrolyte, for example, there is a method that a composition for electrolyte, in which a polymerizable compound and an electrolytic solution are mixed is polymerized by using a polymerization initiator and gelated. Another method is that a high molecular weight compound and an electrolytic solution are mixed by using a diluent solvent and cast, and then the diluent solvent is volatilized to obtain gelatinous state. Of the foregoing methods, the method using the polymerization initiator is preferable since the method has more extensive options of the electrolytic solution compared to the method by the casting, and in the method, there is no need for a coater and a drying furnace, and therefore fabrication thereof is simple and easy.

For example, in the case of being used for a battery, in which electrodes are wound, the high molecular weight electrolyte obtained by the polymerization is fabricated by coating the electrodes with a composition for electrolyte including a polymerizable compound and providing ultraviolet irradiation or heating before winding the electrodes, or by fabricating a winding electrode body by winding electrodes, and then injecting a composition for electrolyte in the winding electrode body and providing heating (for example, refer to Japanese Patent Publication No. S58-56467). In particular, the method that the composition for electrolyte is injected in the winding electrode body and heated is desirable, since this method has a superior joint characteristics in an interface between the high molecular weight electrolyte and the electrode or a separator.

However, there is a problem that such a high molecular weight electrolyte includes the polymerization initiator or the unreacted polymerizable compound, and therefore, in the case of storing a battery in a state of charge, these polymerization initiator and the unreacted polymerizable compound react in the electrodes, and battery resistance is increased, leading to significant lowering of a capacity

SUMMARY OF THE INVENTION

In view of the foregoing problem, it is an object of the invention to provide a composition for electrolyte and a high molecular weight electrolyte capable of inhibiting lowering of a capacity in the case of storing a battery in a state of charge, and a battery using it.

A composition for electrolyte according to the invention is a composition for electrolyte containing an electrolytic solution and a polymerizable compound, wherein the electrolytic solution includes a compound having a structure expressed by Chemical formula 1.

Chemical formula 1

M-O-Si

(In Chemical formula 1, M represents phosphorus (P) or boron (B).)

A high molecular weight electrolyte according to the invention is a high molecular weight electrolyte including an electrolytic solution and a high molecular weight compound, wherein the electrolytic solution includes a compound having a structure expressed by Chemical formula 1.

A battery according to the invention is a battery, comprising: a cathode; an anode; and a high molecular weight electrolyte including an electrolytic solution and a high molecular weight compound, wherein the electrolytic solution includes a compound having a structure expressed by Chemical formula 1.

According to the composition for electrolyte or the high molecular weight electrolyte of the invention, the compound having P-O-Si bond or B-O-Si bond is included. Therefore, for example, when the composition for electrolyte or the high molecular weight electrolyte is used for the battery of the invention, increase in resistance can be inhibited, and lowering of a capacity can be inhibited.

In particular, a content of the compound having P-O-Si bond or B-O-Si bond in the electrolytic solution is in the range from 0.1 wt% to 5 wt%, higher effects can be obtained.

Other and further objects, features and advantages of the invention will appear more fully from the following description.

## BRIEF DESCRIPTION OF THE DRAWINGS

Fig. 1 is an exploded perspective view showing a construction of a secondary battery according to an embodiment of the invention; and

Fig. 2 is a cross section taken along line I-I of a battery device shown in Fig. 1.

## DETAILED DESCRIPTION OF THE PREFERRED EMBODIMENT

An embodiment of the invention will be hereinafter described in detail with reference to the drawings.

A composition for electrolyte according to an embodiment of the invention contains an electrolytic solution and a polymerizable compound. Further, a high molecular weight electrolyte according to an embodiment of the invention is obtained by polymerizing the composition for electrolyte and contains an electrolytic solution and a high molecular weight compound obtained by polymerizing the polymerizable compound. In this specification, the words, " polymerizing the composition for electrolyte" specifically means " polymerizing the polymerizable compound in the composition for electrolyte," and does not mean polymerizing the electrolytic solution and the like included in the composition for electrolyte.

The electrolytic solution is obtained by dissolving an electrolyte salt in a solvent. As a solvent, for example, lactone solvents such as y-butyrolactone, y-valerolactone, δ-valerolactone, and ε-caprolactone; carbonate solvents such as ethylene carbonate, propylene carbonate, butylene carbonate, vinylene carbonate, dimethyl carbonate, ethyl methyl carbonate, and diethyl carbonate; ether solvents such as 1,2-dimethoxy ethane, 1-ethoxy-2-methoxy ethane, 1,2-diethoxy ethane, tetrahydrofuran, and 2-methyl tetrahydrofuran; nitrile solvents such as acetonitrile; sulfolane solvents; phosphoric acids; phosphate ester solvents; and nonaqueous solvents such as pyrrolidones are cited. Any of the solvents can be used singly, or two or more thereof can be used by mixing.

As an electrolyte salt, any electrolyte salt can be used as long as the electrolyte salt is dissolved in the solvent to generate ions. The electrolyte salt can be used singly, or two or more thereof can be used. For example, lithium salts such as lithium phosphate hexafluoride ($LiPF_6$), lithium borate tetrafluoride ($LiBF_4$), lithium arsenate hexafluoride ($LiAsF_6$,), lithium perchlorate ($LiClO_4$), trifluoro methane lithium sulfonate ($LiCF_3SO_3$), bis (trifluoro methane sulfonyl) imido lithium ($LiN(CF_3SO_2)_2$), bis (pentafluoro ethane sulfonyl)imido lithium ($LiN(C_2F_5SO_2)_2$), tris (trifluoro methane sulfonyl) methyl lithium ($LiC(SO_2CF_3)_3$), lithium aluminate tetrafluoride ($LiAlCl_4$), and lithium silicate hexafluoride ($LiSiF_6$) can be cited. Specially, lithium phosphate hexafluoride is preferable, since high ion conductivity can be obtained thereby.

The electrolytic solution includes one or more compounds having a structure expressed by Chemical formula 1 as an additive. When the high molecular weight electrolyte of this embodiment is used for, for example, an after-mentioned battery, the additive can inhibit, for example, the unreacted polymerizable compound or an after-mentioned polymerization initiator from reacting in the electrode leading to increase in resistance.

Chemical formula 1

M-O-Si

(In Chemical formula 1, M represents phosphorus or boron.)

As a compound having the structure expressed by Chemical formula 1, for example, a compound expressed by Chemical formula 2 or a compound expressed by Chemical formula 3 can be cited.

Chemical formula 2

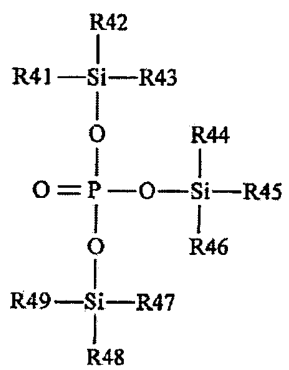

Chemical formula 3

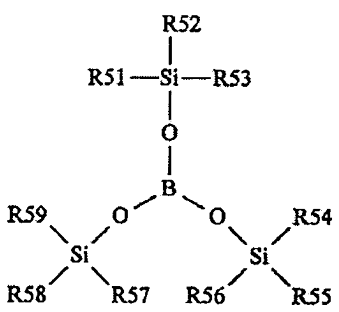

In Chemical formula 2 and Chemical formula 3, R41 and R49, and R51 and R59 represent alkyl groups. These alkyl groups can be identical or different from each other.

Specific examples of the compound expressed by Chemical formula 2 include tris (trimethylsilyl) phosphate shown in Chemical formula 4, tris (triethylsilyl) phosphate shown in Chemical formula 5 and the like. Any of the foregoing can be used singly, or two or more thereof can be used by mixing.

Chemical formula 4

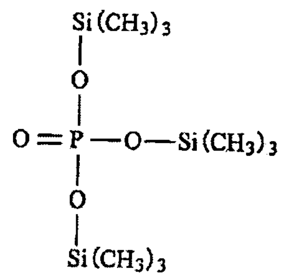

Chemical formula 5

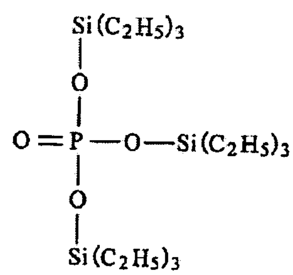

Specific examples of the compound expressed by Chemical formula 3 include tris (trimethylsilyl) borate shown in Chemical formula 6, tris (triethylsilyl) borate shown in Chemical formula 7 and the like.

Chemical formula 6

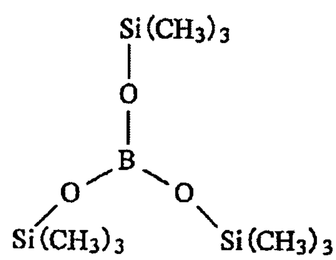

Chemical formula 7

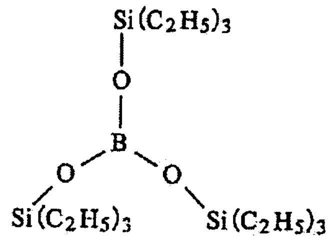

A content of the compound having the structure expressed by Chemical formula 1 in the electrolytic solution is preferably, for example, in the range from 0.1 wt% to 5 wt%. In this range, higher effects can be obtained.

Further, the electrolytic solution can include an additive other than the compound having the structure expressed by Chemical formula 1 if necessary.

A polymerizable compound preferably includes, for example, a compound having an acrylate group or a methacrylate group but not having an ether group. That is, for example, the high molecular weight compound preferably has a structure obtained by polymerizing the polymerizable compound having an acrylate group or a methacrylate group but not having an ether group. If the ether group exists, a cation is coordinated in the ether group, and thereby cation conductivity is decreased. Examples of such a polymerizable compound include, for example, monofunctional acrylate, monofunctional methacrylate, multifunctional acrylate, and multifunctional methacrylate, which do not contain ether groups. Specific examples correspond to acrylic ester, methacrylic ester, acrylic nitrile, methacrylo nitrile, diacrylic ester, triacrylic ester, dimethacrylic ester, trimethacrylic ester and the like.

In particular, as a polymerizable compound, a compound having at least three structure parts of a structure expressed by Chemical formula 8, a structure expressed by Chemical formula 9, and a structure expressed by Chemical formula 10 is preferably used, since very superior battery characteristics can be obtained.

Chemical formula 8

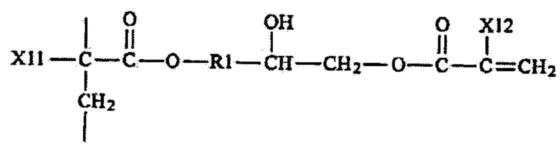

Chemical formula 9

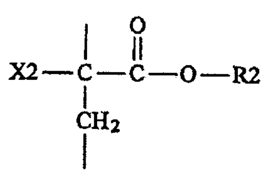

Chemical formula 10

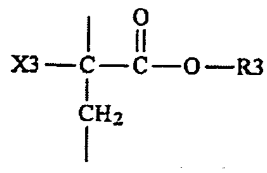

In Chemical formulas 8 to 10, X11, X12, X2, and X3 represent a hydrogen atom or a methyl group. R1 represents a structure part including a carbon but not including an ether group. R2 and R3 represent a hydrogen atom or a structure part including carbon but not including an ether group. Preferably, R1 has an alkylene group not including an ether group, and R2 has a chain or circular alkyl group not including an ether group. The number of the respective structure parts of Chemical formulas 8 to 10 included one compound is optional. When the number is 2, X11, X12, X2, X3, R1, R2, and R3 can be identical or different in the respective structure parts. Further, bond relations between the respective structure parts of Chemical: formulas 8 to 10 are also optional. That is, it is possible that the respective structure parts of Chemical formulas 8 to 10 are repeatedly bonded, for example, at a given order, or are bonded in random order.

As such a polymerizable compound, for example, a compound having a structure expressed by Chemical formula 11, a structure expressed by Chemical formula 12, and a structure expressed by Chemical formula 13 is preferable.

Chemical formula 11

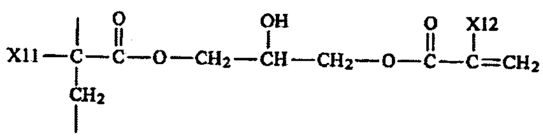

Chemical formula 12

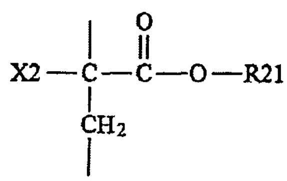

Chemical formula 13

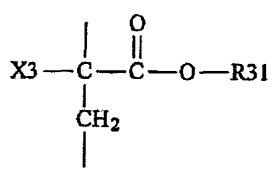

In Chemical formulas 11 to 13, X11, X12, X2, and X3 represent a hydrogen atom or a methyl group. R21 represents a hydrogen atom, an alkyl group whose number of carbon is 10 or less, or a group having an aromatic ring whose number of carbon is 12 or less. R31 represents a hydrogen atom, an alkyl group whose number of carbon is 10 or less, a group having an aromatic ring whose number of carbon is 12 or less, a group expressed by Chemical

formula 14, or a group expressed by Chemical formula 15.

Chemical formula 14

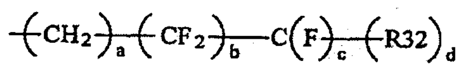

In Chemical formula 14, R32 represents a hydrogen atom, a fluorine atom, or a methyl fluoride ($CF_3$) group. a is an integer number from 0 to 6. b is an integer number from 0 to 16. c is 1 or 2. d is 1 or 2.

Chemical formula 15

-R33-R34

In Chemical formula 15, R33 represents a divalent linkage group. R34 represents a circular carbonate group.

As a more specific example of the polymerizable compound, for example, a compound having the structure expressed by Chemical formula 11, a structure expressed by Chemical formula 16, and a structure expressed by Chemical formula 17 can be cited.

Chemical formula 11

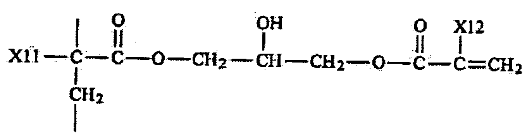

Chemical formula 16

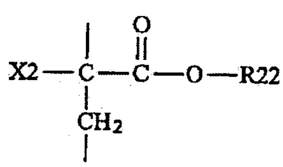

Chemical formula 17

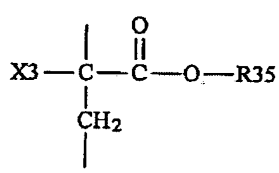

In Chemical formulas 11, 16, and 17, X11, X12, X2, and X3 represent a hydrogen atom or a methyl group. R22 and R35 represent an alkyl group whose number of carbon is 6 or less.

Further, for example, a compound having the structure expressed by Chemical formula 11, the structure expressed by Chemical formula 16, and a structure expressed by Chemical formula 18 can be cited.

Chemical formula 11

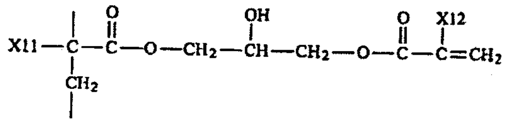

Chemical formula 16

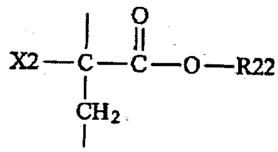

Chemical formula 18

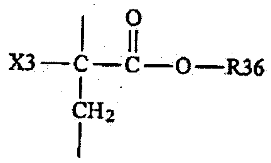

In Chemical formulas 11, 16, and 18, X11, X12, X2, and X3 represent a hydrogen atom or a methyl group. R22 represents an alkyl group whose number of carbon is 6 or less. R36 represents a group having an aromatic ring whose number of carbon is 12 or less. As an example of R36, a group expressed by Chemical formula 19 can be cited.

Chemical formula 19

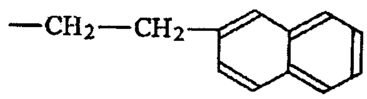

Further, for example, a compound having the structure expressed by Chemical formula 11, the structure expressed by Chemical formula 16, and a structure expressed by Chemical formula 20 can be cited.

Chemical formula 11

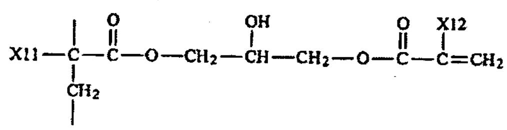

Chemical formula 16

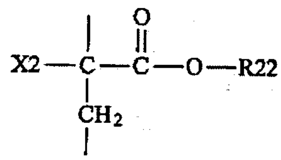

Chemical formula 20

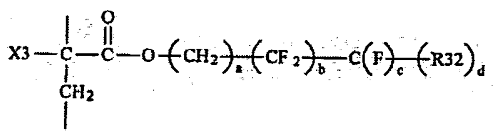

In Chemical formulas 11, 16, and 20, X11, X12, X2, and X3 represent a hydrogen atom or a methyl group. R22 represents an alkyl group whose number of carbon is 6 or less. R32 represents a hydrogen atom, a fluorine atom, or a methyl fluoride ($CF_3$) group. a is an integer number from 0 to 6. b is an integer number from 0 to 16. c is 1 or 2. d is 1 or 2.

In addition, for example, a compound having the structure expressed by Chemical formula 11, the structure expressed by Chemical formula 16, and a structure expressed by Chemical formula 21 can be cited.

Chemical formula 11

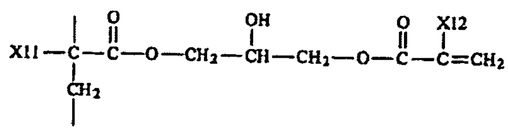

Chemical formula 16

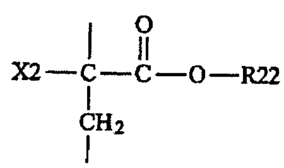

Chemical formula 21

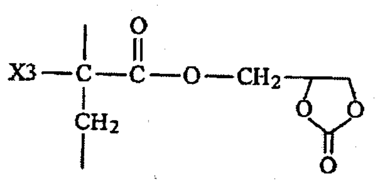

In Chemical formulas 11, 16, and 21, X11, X12, X2, and X3 represent a hydrogen atom or a methyl group. R22 represents an alkyl group whose number of carbon is 6 or less.

Any of the foregoing polymerizable compounds can be used singly. However, it is desirable that a monofunctional body and a multifunctional body are mixed, or single multifunctional body is used, or two or more of the multifunctional bodies are mixed. Thereby, it becomes easy to strike a balance between mechanical strength and electrolytic solution holding characteristics of the polymerized high molecular weight electrolyte.

A ratio of the polymerizable compound or the high molecular weight compound obtained by polymerizing the polymerizable compound with respect to the electrolytic solution is preferably from 3 parts by mass to 10 parts by mass of the polymerizable compound or the high molecular weight compound to 100 parts by mass of the electrolytic solution. When the ratio of the polymerizable compound or the high molecular weight compound is low, sufficient mechanical strength cannot be obtained. Meanwhile, when the ratio of the polymerizable compound or the high molecular weight compound is high, ion conductivity becomes low.

The composition for electrolyte further includes a polymerization initiator if necessary. As a polymerization initiator, an azo polymerization initiator, a peroxide polymerization initiator and the like can be used. Specially, the peroxide polymerization initiator is preferable. When the peroxide polymerization initiator is used, generation of gas can be inhibited in gelation.

As a peroxide polymerization initiator, for example, a ketone peroxide polymerization initiator, a peroxyketal polymerization initiator, a hydroperoxide polymerization initiator, a peroxydicarbonate polymerization initiator, and a peroxyester polymerization initiator can be cited. Specially, the peroxyester polymerization initiator is preferable. Thereby, even when the ratio of the polymerizable compound is low, sufficient gelation and sufficient mechanical strength can be obtained. Any of the foregoing polymerization initiators can be used singly, or two or more thereof can be used by mixing.

As a peroxyester polymerization initiator, for example, t-butyl peroxyneodecanoate, t-hexyl peroxyneodecanoate, 1,1,3,3-tetramethyl butyl peroxyneodecanoate, t-butyl peroxypivalate, t-hexyl peroxypivalate, 1,1,3,3-tetramethyl butyl peroxy-2-ethylhexanoate, t-butylperoxy-2-ethylhexanoate, t-butyl peroxyisobutylate, t-butyl peroxy-3,5,5-trimethyl hexanoate, t-butyl peroxylaurate, and t-butyl peroxyacetate can be cited. Any of the foregoing peroxyester polymerization initiators can be used singly, or two or more thereof can be used by mixing.

A ratio of the polymerization initiator in the composition for electrolyte is preferably from 0.01 parts by mass to 5 parts by mass with respect to 100 parts by mass of the electrolytic solution. In this range, both mechanical strength and ion conductivity of the high molecular weight electrolyte can be improved.

The high molecular weight electrolyte according to this embodiment can be obtained by heating the composition for electrolyte. Then, heating temperatures are preferably 90°C or less, and more preferably 75°C or less. When heating temperatures are too high, the electrolyte salt included in the electrolytic solution may be decomposed.

This high molecular weight electrolyte is used for a battery, for example, as follows.

Fig. 1 shows an exploded view of a secondary battery using the high molecular weight electrolyte according to this embodiment. This secondary battery has a construction, in which a battery device 20 on which a cathode terminal 11 and an anode terminal 12 are attached is enclosed inside film exterior members 30A and 30B. The cathode terminal 11 and the anode terminal 12 are directed from inside to outside of the exterior members 30A and 30B, and, for example, are derived in the same direction, respectively. The cathode terminal 11 and the anode terminal 12 are respectively made of a metal material such as aluminum (Al), copper (Cu), nickel (Ni), and stainless.

The exterior members 30A and 30B are made of a laminated film in the shape of a rectangle, in which, for example, a nylon film, an aluminum foil, and a polyethylene film are bonded together in this order. The exterior members 30A and 30B are, for example, arranged so that a polyethylene film side and the battery device 20 are opposed, and respective outer edge parts are contacted to each other by fusion bonding or an adhesive. Adhesive films 31 to protect from outside air intrusion are inserted between the exterior members 30A, 30B and the cathode terminal 11, the anode terminal 12. The adhesive film 31 is made of a material having contact characteristics to the cathode terminal 11 and the anode terminal 12. For example, when the cathode terminal 11 and the anode terminal 12 are made of the foregoing metal material, the adhesive film 31 is preferably made of a polyolefin resin such as polyethylene, polypropylene, modified polyethylene, and modified polypropylene.

The exterior members 30A and 30B can be made of a laminated film having other structure, a high molecular weight film such as polypropylene, or a metal film, instead of the foregoing laminated film.

Fig. 2 is a view showing a cross section structure taken along line I-I of the battery device 20 shown in Fig. 1. In the battery device 20, a cathode 21 and an anode 22 are located oppositely with a high molecular weight electrolyte 23 according to this embodiment and a separator 24 inbetween, and are wound. An outermost periphery part thereof is protected by a protective tape 25.

The cathode 21 has, for example, a structure, in which a cathode active material layer 21B is provided on both faces or one face of a cathode current collector 21A having a pair of opposed faces. At one end of the cathode current collector 21A in the longitudinal direction, there is an exposed part on which no cathode active material layer 21B is provided. The cathode terminal 11 is attached on this exposed part. The cathode current collector 21A is made of, for example, a metal foil such as an aluminum foil, a nickel foil, and a stainless foil.

The cathode active material layer 21B includes, for example, one or more cathode materials capable of inserting and extracting lithium (Li) as a cathode active material, and can include a conductive agent and a binder if necessary. As a cathode material capable of inserting and extracting lithium, for example, metal sulfides or metal oxides not containing lithium such as titanium sulfide ($TiS_2$), molybdenum sulfide ($MoS_2$), niobium selenide ($NbSe_2$), and vanadium oxide ($V_2O_5$); lithium complex oxides containing lithium; lithium-containing phosphoric acid compounds; and high molecular weight compounds such as polyacetylene and polypyrrole can be cited.

Specially, the lithium complex oxide and the lithium-containing phosphoric acid compound are preferable, since a high voltage and a high energy density can be thereby obtained. As such lithium complex oxide or lithium-containing phosphoric acid compound, for example, a material expressed by a chemical formula of $Li_xMIO_2$ or a chemical formula of $Li_yMIIPO_4$ can be cited. In the formulas, MI and MII represent one or more of transition metals, and in particular, preferably include at least one of cobalt (Co), nickel, manganese (Mn), and iron (Fe). Values of x and y vary according to charge and discharge conditions of the battery, and are generally in the range of $0.05 \leqq x \leqq 1.10$, and $0.05 \leqq y \leqq 1.10$. Specific examples of such lithium complex oxides expressed by the chemical formula of $Li_xMIO_2$ include lithium cobalt complex oxides ($LiCoO_2$), lithium nickel complex oxides ($LiNiO_2$), lithium nickel cobalt complex oxides ($LiNi_zCo_{1-Z}O_2$ (0<z<1)), and lithium manganese complex oxides ($LiMn_2O_4$).

As the cathode 21 does, for example, the anode 22 has a structure, in which an anode active material layer 22B is provided on both faces or one face of an anode current collector 22A having a pair of opposed faces. The anode current collector 22A is made of, for example, a metal foil such as a copper foil, a nickel foil, and a stainless foil.

The anode active material layer 22B includes, for example, one or more of an anode material capable of inserting and extracting lithium and metal lithium, and can include a conductive agent and a binder if necessary. As an anode material capable of inserting and extracting lithium, for example, carbon materials, metal oxides, and high molecular weight compounds can be cited. As a carbon material, non-graphitizable carbon materials, graphite materials and the like can be cited. More specifically, pyrolytic carbons, cokes, graphites, glassy carbons, organic high molecular weight compound fired body, carbon fiber, activated carbon and the like can be cited. Of the foregoing, cokes include pitch coke, needle coke, and petroleum coke. The organic high molecular weight compound fired body is a material, which is carbonized by firing a high molecular weight material such as phenol resins and furan resins at appropriate temperatures. As a metal oxide, iron oxide, ruthenium oxide, molybdenum oxide and the like can be cited. As a high molecular weight compound, polyacetylene, polypyrrole and the like can be cited.

As an anode material capable of inserting and extracting lithium, simple substances, alloys, and compounds of metal elements capable of forming an alloy with lithium, and simple substances, alloys, and compounds of metalloid elements capable of forming an alloy with lithium can be cited. Alloys include alloys consisting of two or more metal elements and, in addition, alloys consisting of one or more metal elements and one or more metalloid elements. Structures thereof include a solid solution structure, an eutectic (eutectic mixture) structure, an intermetallic compound structure, and a structure, in which two or more of the foregoing structures coexist.

Examples of such metal elements or metalloid elements include, for example, tin (Sn), lead (Pb), aluminum, indium (In), silicon (Si), zinc (Zn), antimony (Sb), bismuth (Bi), gallium (Ga), germanium (Ge), arsenic (As), silver (Ag), hafnium (Hf), zirconium (Zr), and yttrium (Y). Examples of alloys or compounds thereof include, for example, alloys or compounds which are expressed by a chemical formula of $Ma_sMb_t$. In this chemical formula, Ma represents at least one of metal elements and metalloid elements capable of forming an alloy with lithium, and Mb represents at least one of elements other than Ma. Values of s and t are $s>0$ and $t\geqq 0$, respectively.

Specially, simple substances, alloys, and compounds of metal elements or metalloid elements in Group 14 in the long period periodic table are preferable. Silicon and tin, or alloys and compounds thereof are particularly preferable. These materials can be crystalline or amorphous.

Specific examples of such alloys and compounds include LiAl, AlSb, CuMgSb, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$) $Si_2N_2O$, $SiO_v$ ($0<v\leqq 2$), $SnO_w$ ($0<w\leqq 2$), $SnSiO_3$, LiSiO, and LiSnO.

The separator 24 is constructed from, for example, a porous film made of a polyolefin material such as polypropylene and polyethylene, or a porous film made of an inorganic material such as a ceramics nonwoven cloth. They are insulative thin films having large ion permeability and given mechanical strength. The separator 24 can have a structure, in which two or more of the foregoing porous films are layered.

This secondary battery can be, for example, manufactured as follows.

First, the cathode 21 is fabricated. For example, when a particulate cathode active material is used, the cathode active material, and if necessary, a conductive agent, and a binder are mixed to prepare a cathode mixture. The cathode mixture is dispersed in a dispersion medium such as N-methyl-2-pyrrolidone to obtain a cathode mixture slurry. After that, the cathode current collector 21A is coated with this cathode mixture slurry, dried, and compression-molded to form the cathode active material layer 21B.

Further, the anode 22 is fabricated. For example, when a particulate anode active material is used, the anode active material, and if necessary, a conductive agent, and a binder are mixed to prepare an anode mixture. The anode mixture is dispersed in a dispersion medium such as N-methyl-2-pyrrolidone to obtain an anode mixture slurry. After

that, the anode current collector 22A is coated with this anode mixture slurry, dried, and compression-molded to form the anode active material layer 22B.

Next, the cathode terminal 11 is attached on the cathode 21, and the anode terminal 12 is attached on the anode 22. After that, the separator 24, the cathode 21, the separator 24, and the anode 22 are sequentially layered and wound. The protective tape 25 is adhered to the outermost periphery part to form the winding electrode body. Subsequently, this winding electrode body is sandwiched between the exterior members 30A and 30B, and outer edge parts except for one side of the exterior members 30A and 30B are thermally fusion-bonded to obtain a pouched state.

After that, the composition for electrolyte including the foregoing electrolytic solution, polymerizable compound, and if necessary, the polymerization initiator is prepared, which is injected through an opening of the exterior members 30A and 30B into inside the winding electrode body, and enclosed by thermal fusion bonding the opening of the exterior members 30A and 30B. Next, the winding electrode body, into which the composition for electrolyte is injected is heated from outside the exterior members 30A and 30B to polymerize the polymerizable compound. Thereby, the gelatinous high molecular weight electrolyte 23 is formed. As described above, heating temperatures are preferably 90°C or less, and are more preferably 75°C or less. Thereby, the secondary battery shown in Figs. 1 and 2 is completed.

This secondary battery may be manufactured as follows. For example, it is possible that the composition for electrolyte is not injected after fabricating the winding electrode body, but the cathode 21 and the anode 22 are coated with the composition for electrolyte, and then the resultant is wound, enclosed inside the exterior members 30A and 30B, and heated. Otherwise, it is possible that the cathode 21 and the anode 22 are coated with the composition for electrolyte, the resultant is heated to form the high molecular weight electrolyte 23, and then the resultant is wound and enclosed inside the exterior members 30A and 30B. However, it is more preferable that heating is performed after enclosing the resultant inside the exterior members 30A and 30B. If the resultant is wound after forming the high molecular weight electrolyte 23 by heating, interface bonding between the high molecular weight electrolyte 23 and the cathode 21, the anode 22, or the separator 24 may become insufficient, and internal resistance may be increased.

In this secondary battery, when charged, for example, lithium ions are extracted from the cathode active material layer 21B, and inserted in the anode active material layer 22B through the high molecular weight electrolyte 23. When discharged, for example, lithium ions are extracted from the anode active material layer 22B, and are inserted in the cathode active material layer 21B through the high molecular weight electrolyte 23. Then, since the high molecular weight electrolyte 23 includes the compound having P-O-Si bond or B-O-Si bond, the unreacted polymerizable compound or the polymerization initiator are inhibited from reacting in the electrode.

As above, according to the high molecular weight electrolyte 23 obtained by heating the composition for electrolyte of this embodiment, since the high molecular weight electrolyte 23 includes the compound having P-O-Si bond or B-O-Si bond, for example, in the case of being used for the battery of this embodiment, the unreacted polymerizable compound, the polymerization initiator and the like can be inhibited from reacting in the electrode, increase in resistance can be inhibited, and lowering of the capacity can be inhibited.

In particular, when the content of the compound having P-O-Si bond or B-O-Si bond in the electrolytic solution is in the range from 0.1 wt% to 5 wt%, higher effects can be obtained.

Further, as a polymerizable compound, the compound having an acrylate group or a methacrylate group, and not including an ether group is used, in particular, the compound having the respective structures expressed by Chemical formulas 8, 9, and 10 is used, battery characteristics such as a capacity and cycle characteristics can be further improved.

In addition, when the peroxyester polymerization initiator is used, gas generation in gelation can be inhibited, and sufficient gelation can be realized and sufficient mechanical strength can be obtained even if the ratio of the polymerizable compound is low.

[Examples]

Further, descriptions will be given in detail of specific examples of the invention with reference to the drawings. In the examples, the secondary battery shown in Figs. 1 and 2 was fabricated.

(Examples 1 to 3)

First, 0.5 mol of lithium carbonate ($Li_2CO_3$) and 1 mol of cobalt carbonate ($CoCo_3$) were mixed, and the mixture was fired for 5 hours at 900°C in the air to obtain lithium cobalt complex oxide ($LiCoO_2$) as a cathode active material. Next, 85 parts by mass of the obtained lithium cobalt complex oxide, 5 parts by mass of graphite as a conductive agent, and 10 parts by mass of polyvinylidene fluoride as a binder were mixed to prepare a cathode mixture. The cathode mixture was dispersed in N-methyl-2-pyrrolidone, which is a dispersion medium, to obtain a cathode mixture slurry. Subsequently, both faces of the cathode current collector 21A made of an aluminum foil being 20 µm thick were uniformly coated with this cathode mixture slurry, dried, and compression-molded by a roll pressing machine to form the

cathode active material layer 21B. Consequently, the cathode 21 was fabricated. After that, the cathode terminal 11 was attached on the cathode 21.

Further, pulverized graphite powders were prepared as an anode active material. 90 parts by mass of the graphite powders and 10 parts by mass of polyvinylidene fluoride as a binder were mixed to prepare an anode mixture. The anode mixture was dispersed in N-methyl-2-pyrrolidone, which is a dispersion medium, to obtain an anode mixture slurry. Next, both faces of the anode current collector 22A made of a copper foil being 15 µm thick were uniformly coated with this anode mixture slurry, dried, and compression-molded by a roll pressing machine to form the anode active material layer 22B. Consequently, the anode 22 was fabricated. Subsequently, the anode terminal 12 was attached on the anode 22.

After the cathode 21 and the anode 22 were fabricated, the cathode 21 and the anode 22 were contacted with the separator 24 made of a micro-porous polyethylene film being 25 µm thick inbetween, wound in the longitudinal direction, and the protective tape 25 was adhered to the outermost periphery part. Thereby, the winding electrode was fabricated.

Further, 100 parts by mass of an electrolytic solution, 5 parts by mass of a polymerizable compound solution, and 0.1 parts by mass of t-butyl peroxyneodecanoate as a peroxyester polymerization initiator were mixed to prepare a composition for electrolyte. Then, as an electrolytic solution, the electrolytic solution obtained by dissolving lithium phosphate hexafluoride in a solvent, in which ethylene carbonate and diethyl carbonate were mixed at a mole ratio of ethylene carbonate:diethyl carbonate=3:7 so that lithium phosphate hexafluoride became 1 mol/l, and adding thereto an compound having P-O-Si bond or B-O-Si bond as an additive was used. As an additive, tris (trimethylsilyl) phosphate expressed by Chemical formula 4 was used in Example 1, tris (triethylsilyl) phosphate expressed by Chemical formula 5 was used in Example 2, and tris (trimethylsilyl) borate expressed by Chemical formula 6 was used in Example 3. A content of all the additive in the electrolytic solution was 1 wt%.

Further, as a polymerizable compound, a mixture, in which trimethylol propane triacrylate shown in Chemical formula 22 and neopentyl glycol diacrylate shown in Chemical formula 23 were mixed at a mole ratio of trimethylol propane triacrylate: neopentyl glycol diacrylate=3:7 was used.

Chemical formula 22

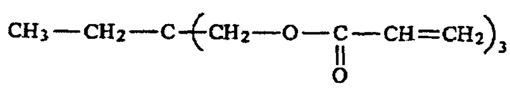

Chemical formula 23

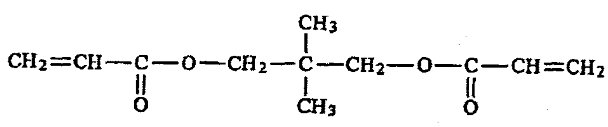

Next, the fabricated winding electrode body was loaded between the exterior members 30A and 30B, and three sides of the exterior members 30A and 30B were thermally fusion-bonded. For the exterior members 30A and 30B, a dampproof aluminum laminated film, in which a nylon film being 25 µm thick, an aluminum foil being 40 µm thick, and a polypropylene film being 30 µm thick were sequentially layered from the outermost layer was used.

Subsequently, the composition for electrolyte was injected inside the exterior members 30A and 30B, the remaining one side of the exterior members 30A and 30B was thermally fusion-bonded under the reduced pressure, and hermetically sealed. After that, the resultant was sandwiched between glass plates, heated for 15 minutes at 70 °C to polymerize the polymerizable compound. Thereby, the composition for electrolyte was gelated to obtain the high molecular weight electrolyte 23. Thereby, the secondary battery shown in Figs. 1 and 2 was obtained.

Further, as a comparative example to these examples, in Comparative example 1, a secondary battery was fabricated as in Example 1, except that the additive was not used; in Comparative example 2, the secondary battery was fabricated as in Example 1, except that the polymerizable compound solution and the polymerization initiator were not used, and heating treatment was not performed; and in Comparative example 3, the secondary battery was fabricated as in Example 1, except that the polymerizable compound solution, the polymerization initiator, and the additive were not used, and heating treatment was not performed.

For the respective obtained secondary batteries of Examples 1 to 3 and Comparative examples 1 to 3, 500 mA constant current constant voltage charge at 23°C was performed for 2 hours up to 4.2 V After battery resistance was measured, 250 mA constant current discharge at -20°C was performed until a final voltage of 3.0 V, and a discharge capacity at low temperatures was measured. Further, 500 mA constant current constant voltage charge at 23°C was performed for 2 hours up to 4.2 V, and the secondary batteries were stored in the charge state for 20 days at 23°C. After that, battery resistance after storage was measured. After that, 250 mA constant current discharge was performed at -20°C until a final voltage of 3.0 V under the conditions similar to the foregoing conditions, and a discharge capacity at low temperatures after storage was obtained. Thereby, a resistance increase ratio before and after storage was calculated by [(resistance after storage - resistance before storage)/resistance before storage]×100. Further, a discharge capacity retention ratio at low temperatures was calculated by (discharge capacity after storage/discharge capacity before storage) ×100. Obtained results are shown in

Table 1

| | State of electrolyte | Additive | Resistance increase ratio (%) | Discharge capacity retention ratio (%) |
|---|---|---|---|---|
| Example 1 | Gelatinous | tris (trimethylsilyl) phosphate | +11% | 93% |
| Example 2 | Gelatinous | tris (triethylsilyl) phosphate | +11% | 91% |
| Example 3 | Gelatinous | tris (trimethylsilyl) borate | +9% | 90% |
| Comparative example 1 | Liquid | Not added | +29°/ | 80% |
| Comparative example 2 | Liquid | tris (trimethylsilyl) phosphate | +9% | 93% |
| Comparative example 3 | Liquid | Not added | +15% | 89% |

As evidenced by Table 1, according to Examples 1 to 2, in which the additive having P-O-Si bond was added, the resistance increase ratio could be more decreased, and the discharge capacity retention ratio could be more increased, rather than in Comparative example 1, in which the additive was not added. Further, regarding Comparative examples 2 and 3 using the non-gelated liquid electrolyte, the discharge retention ratio could be more increased in Comparative example 2, in which the additive was added. However, the increase degree thereof was higher in Examples 1 and 2. Further, when the additive was changed to the compound having B-O-Si bond, similar effects could be obtained as in Examples 1 and 2.

That is, when the compound having P-O-Si bond or B-O-Si bond is included, increase in battery resistance can be inhibited and lowering of the capacity can be inhibited, particularly in the case using the high molecular weight compound obtained by polymerizing the polymerizable compound.

(Examples 4 to 7)

Secondary batteries were fabricated as in Example 1, except that contents of tris (trimethylsilyl) phosphate in the electrolytic solution were changed as shown in Table 2. Regarding these secondary batteries, resistance increase ratios and discharge capacity retention ratios before and after storage were obtained similarly to in Example 1. Results thereof are shown in Table 2 together with the results of Example 1 and Comparative example 1.

Table 2

| | Content of additive (tris (trimethylsilyl) phosphate) (wt°/) | Resistance increase ratio (%) | Discharge capacity retention ratio (%) |
|---|---|---|---|
| Example 4 | 0.05 | +20% | 83% |
| Example 5 | 0.1 | +13% | 90% |
| Example 1 | 1 | +10% | 93% |

Table 2 (continued)

| | Content of additive (tris (trimethylsilyl) phosphate) (wt°/) | Resistance increase ratio (%) | Discharge capacity retention ratio (%) |
|---|---|---|---|
| Example 6 | 5 | +12% | 91% |
| Example 7 | 6 | +15% | 86% |
| Comparative example 1 | 0 | +29% | 80% |

As evidenced by Table 2, according to Examples 4 to 7, results similar to in Example 1 were obtained. Further, according to Examples 1, 5, and 6, improvement effects of the charge capacity retention ratio were larger than in Example 4, in which the content of the additive was less than 0.1 wt%, or in Example 7, in which the content of the additive was over 5 wt%. That is, when the content of the compound having P-O-Si bond or B-O-Si bond in the electrolytic solution is from 0.1 wt% to 5 wt%, increase in battery resistance can be more inhibited, and lowering of the capacity can be more inhibited.

While the invention has been described with reference to the embodiment and the examples, the invention is not limited to the foregoing embodiment and the examples, and various modifications may be made. For example, in the foregoing embodiment and the examples, the case, in which the high molecular weight electrolyte 23 includes the compound having the structure expressed by chemical formula 1 as an additive has been described. However, it is possible that the polymerizable compound has this structure.

Further, in the foregoing embodiment and the examples, the case, in which the composition for electrolyte includes the electrolytic solution, the polymerizable compound, and if necessary, the polymerization initiator has been described. However, the composition for electrolyte can include other materials, additives and the like.

Further, in the foregoing embodiment and the examples, the composition for electrolyte is heated to fabricate the high molecular weight electrolyte 23. However, the composition for electrolyte can be heated while being pressurized, or can be pressurized after being heated.

In addition, in the foregoing embodiment and the examples, the construction of the secondary battery has been described with reference to one example. However, the invention can be applied to batteries having other construction. For example, though in the foregoing embodiment, the winding laminated type secondary battery has been described, the invention can be similarly applied to a monolayer laminated type secondary battery, or a multilayer laminated type secondary battery. Further, the invention can be applied to secondary batteries such as a so-called cylinder type, square type, coin type, button type and the like. Further, the invention is not only applied to the secondary batteries, but also applied to primary batteries.

Further, in the foregoing embodiment and the examples, the secondary battery using lithium as an electrode reaction substance has been described. However, the invention can be applied to the case, in which as an electrode reaction substance, other alkali metal such as sodium and potassium, or an alkali earth metal such as magnesium and calcium, or other light metal such as aluminum is used. Then, the cathode active material, the anode active material, the nonaqueous solvent and the like are selected according to the electrolyte salt.

Obviously many modifications and variations of the present invention are possible in the light of the above teachings. It is therefore to be understood that within the scope of the appended claims the invention may be practiced otherwise than as specifically described.

## Claims

1. A composition for electrolyte containing an electrolytic solution and a polymerizable compound, wherein the electrolytic solution includes a compound having a structure expressed by Chemical formula 1:

Chemical formula 1

M-O-Si ,

wherein M represents phosphorus (P) or boron (B).

2. A composition for electrolyte according to claim 1, wherein the electrolytic solution includes at least one from the

group consisting of tris (trimethylsilyl) phosphate shown in Chemical formula 4, tris (triethylsilyl) phosphate shown in Chemical formula 5, tris (trimethylsilyl) borate shown in Chemical formula 6, and tris (triethylsilyl) borate shown in Chemical formula 7:

Chemical formula 4

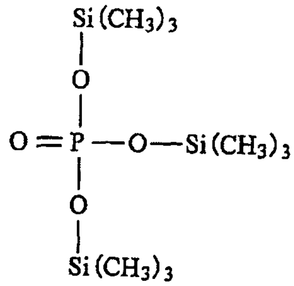

Chemical formula 5

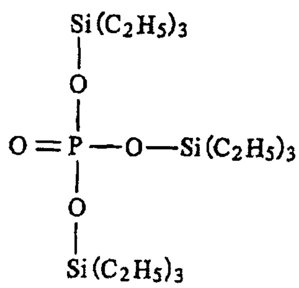

Chemical formula 6

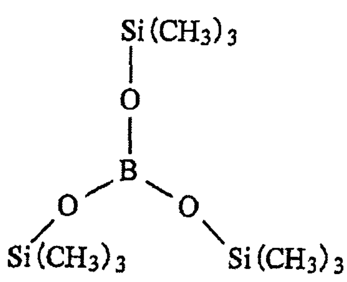

Chemical formula 7

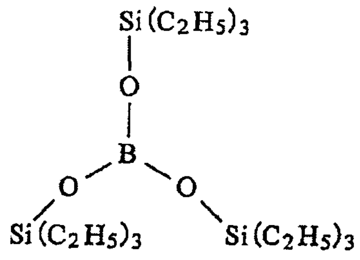

3. A composition for electrolyte according to claim 1, wherein a content of the compound in the electrolytic solution is from 0.1 wt% to 5 wt%.

4. A composition for electrolyte according to claim 1, wherein the polymerizable compound has an acrylate group or a methacrylate group, and does not include an ether group.

5. A composition for electrolyte according to claim 1, wherein the polymerizable compound includes a compound having a structure expressed by Chemical formula 8, a structure expressed by Chemical formula 9, and a structure expressed by Chemical formula 10:

Chemical formula 8

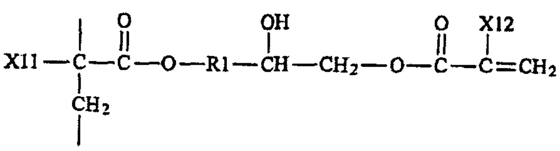

Chemical formula 9

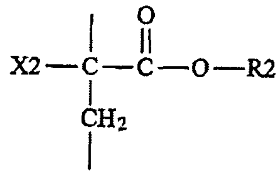

Chemical formula 10

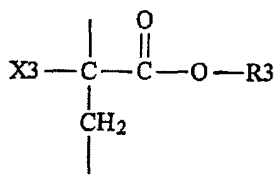

;

wherein X11, X12, X2, and X3 represent a hydrogen atom or a methyl group, R1 represents a structure part including a carbon but not including an ether group, R2 and R3 represent a hydrogen atom or a structure part including carbon but not including an ether group.

**6.** A composition for electrolyte according to claim 1, wherein the polymerizable compound includes a compound having a structure expressed by Chemical formula 11, a structure expressed by Chemical formula 12, and a structure expressed by Chemical formula 13:

Chemical formula 11

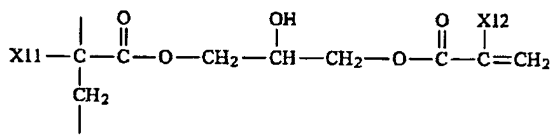

Chemical formula 12

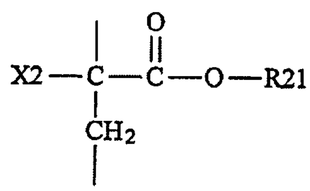

Chemical formula 13

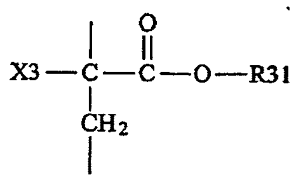

;

wherein X11, X12, X2, and X3 represent a hydrogen atom or a methyl group; R21 represents a hydrogen atom, an alkyl group whose number of carbon is 10 or less, or a group having an aromatic ring whose number of carbon is 12 or less; R31 represents a hydrogen atom, an alkyl group whose number of carbon is 10 or less, a group having an aromatic ring whose number of carbon is 12 or less, a group expressed by Chemical formula 14, or a group expressed by Chemical formula 15:

Chemical formula 14

$$-(CH_2)_a-(CF_2)_b-C(F)_c-(R32)_d$$

;

wherein R32 represents a hydrogen atom, a fluorine atom, or a methyl fluoride ($CF_3$) group; "a" being an integer number from 0 to 6. "b" being an integer number from 0 to 16, "c" being 1 or 2, "d" being 1 or 2;

Chemical formula 15

-R33-R34 ,

wherein R33 represents a divalent linkage group, and R34 represents a circular carbonate group.

**7.** A composition for electrolyte according to claim 1, wherein the polymerizable compound includes a compound having a structure expressed by Chemical formula 11, a structure expressed by Chemical formula 16, and a structure expressed by Chemical formula 17:

Chemical formula 11

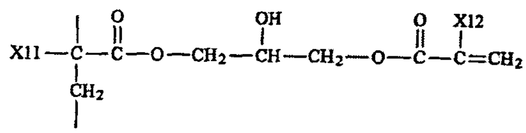

Chemical formula 16

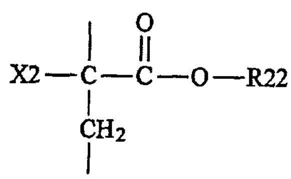

Chemical formula 17

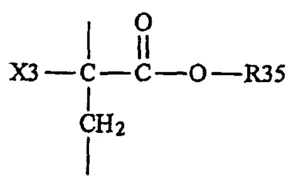

;

wherein X11, X12, X2, and X3 represent a hydrogen atom or a methyl group; R22 and R35 represent an alkyl group whose number of carbon is 6 or less.

**8.** A high molecular weight electrolyte including an electrolytic solution and a high molecular weight compound, wherein

the electrolytic solution includes a compound having a structure expressed by Chemical formula 1:

Chemical formula 1

M-O-Si ,

wherein M represents phosphorus or boron.

**9.** A high molecular weight electrolyte according to claim 8, wherein the electrolytic solution includes at least one from the group consisting of tris (trimethylsilyl) phosphate shown in Chemical formula 4, tris (triethylsilyl) phosphate shown in Chemical formula 5, tris (trimethylsilyl) borate shown in Chemical formula 6, and tris (triethylsilyl) borate

shown in Chemical formula 7:

Chemical formula 4

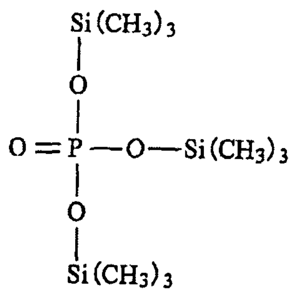

Chemical formula 5

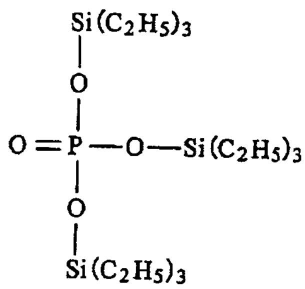

Chemical formula 6

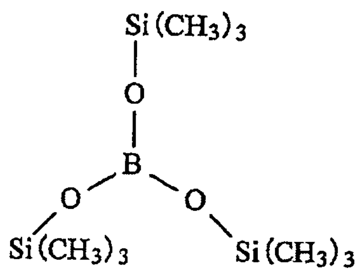

Chemical formula 7

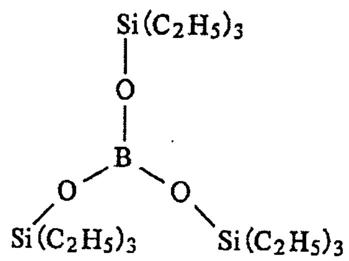

10. A high molecular weight electrolyte according to claim 8, wherein a content of the compound in the electrolytic solution is from 0.1 wt% to 5 wt%.

11. A high molecular weight electrolyte according to claim 8, wherein the high molecular weight compound is obtained by polymerizing a polymerizable compound.

12. A high molecular weight electrolyte according to claim 8, wherein the high molecular weight compound has a structure obtained by polymerizing a polymerizable compound having an acrylate group or a methacrylate group, and not including an ether group.

13. A high molecular weight electrolyte according to claim 8, wherein the high molecular weight compound has a structure obtained by polymerizing a polymerizable compound having a structure expressed by Chemical formula 8, a structure expressed by Chemical formula 9, and a structure expressed by Chemical formula 10:

Chemical formula 8

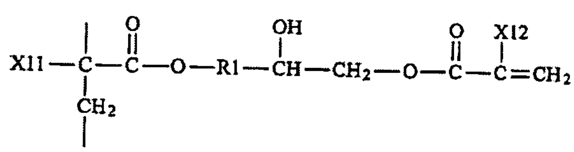

Chemical formula 9

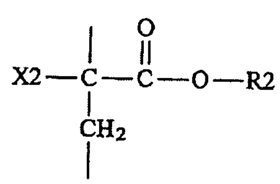

Chemical formula 10

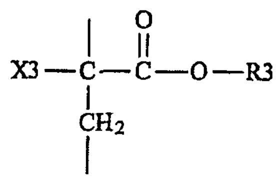

,

wherein, X11, X12, X2, and X3 represent a hydrogen atom or a methyl group, R1 represents a structure part including a carbon but not including an ether group, R2 and R3 represent a hydrogen atom or a structure part including carbon but not including an ether group.

**14.** A high molecular weight electrolyte according to claim 8, wherein the high molecular weight compound has a structure obtained by polymerizing a polymerizable compound having a structure expressed by Chemical formula 11, a structure expressed by Chemical formula 12, and a structure expressed by Chemical formula 13:

Chemical formula 11

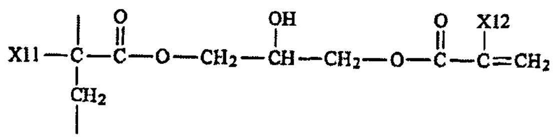

Chemical formula 12

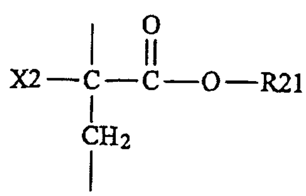

Chemical formula 13

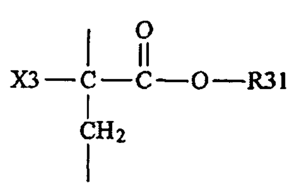

,

wherein X11, X12, X2, and X3 represent a hydrogen atom or a methyl group, R21 represents a hydrogen atom, an alkyl group whose number of carbon is 10 or less, or a group having an aromatic ring whose number of carbon is 12 or less, R31 represents a hydrogen atom, an alkyl group whose number of carbon is 10 or less, a group having an aromatic ring whose number of carbon is 12 or less, a group expressed by Chemical formula 14, or a

group expressed by Chemical formula 15:

Chemical formula 14

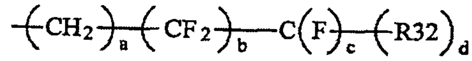

,

wherein R32 represents a hydrogen atom, a fluorine atom, or a methyl fluoride ($CF_3$) group, "a" being an integer number from 0 to 6, "b" being an integer number from 0 to 16, "c" being 1 or 2, "d" being 1 or 2;

Chemical formula 15

-R33-R34 ,

wherein R33 represents a divalent linkage group and R34 represents a circular carbonate group.

**15.** A high molecular weight electrolyte according to claim 8, wherein the high molecular weight compound has a structure obtained by polymerizing a polymerizable compound having a structure expressed by Chemical formula 11, a structure expressed by Chemical formula 16, and a structure expressed by Chemical formula 17:

Chemical formula 11

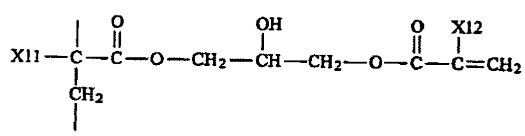

Chemical formula 16

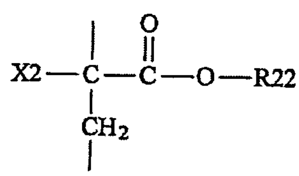

Chemical formula 17

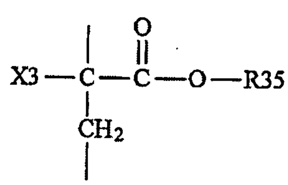

,

wherein X11, X12, X2, and X3 represent a hydrogen atom or a methyl group, R22 and R35 represent an alkyl group whose number of carbon is 6 or less.

**16.** A battery, comprising:

a cathode;
an anode; and
a high molecular weight electrolyte including an electrolytic solution and a high molecular weight compound, wherein
the electrolytic solution includes a compound having a structure defined in at least one of the claims 1, 2, 3, 5, 6, 7 or 8.

**17.** A battery according to claim 16, wherein the high molecular weight compound has a structure obtained by polymerizing a polymerizable compound having an acrylate group or a methacrylate group, and not including an ether group.

**18.** A battery according to claim 16, wherein the cathode, the anode, and the high molecular weight electrolyte are housed inside exterior members, and the high molecular weight compound is polymerized inside the exterior members.

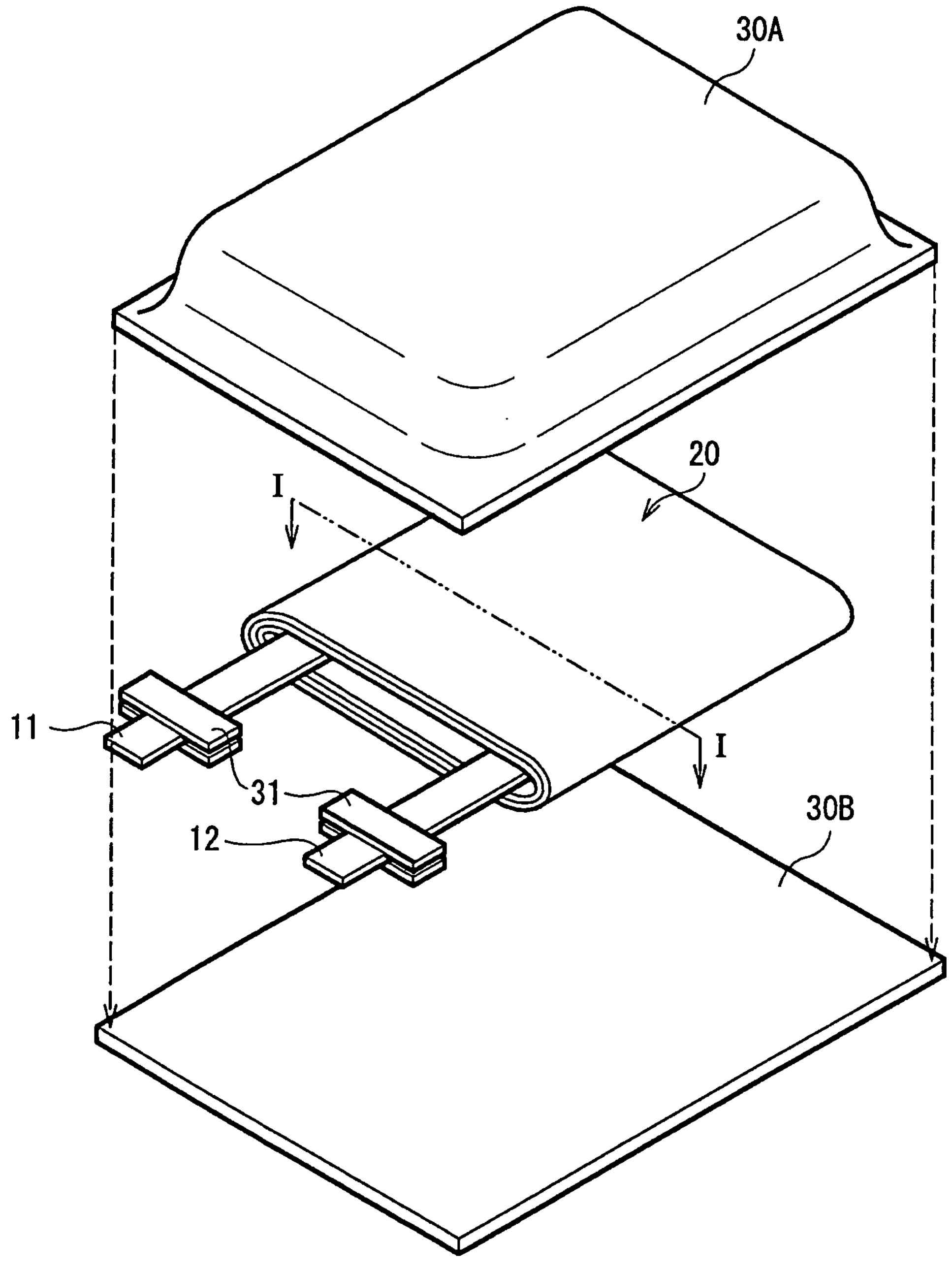


FIG. 1

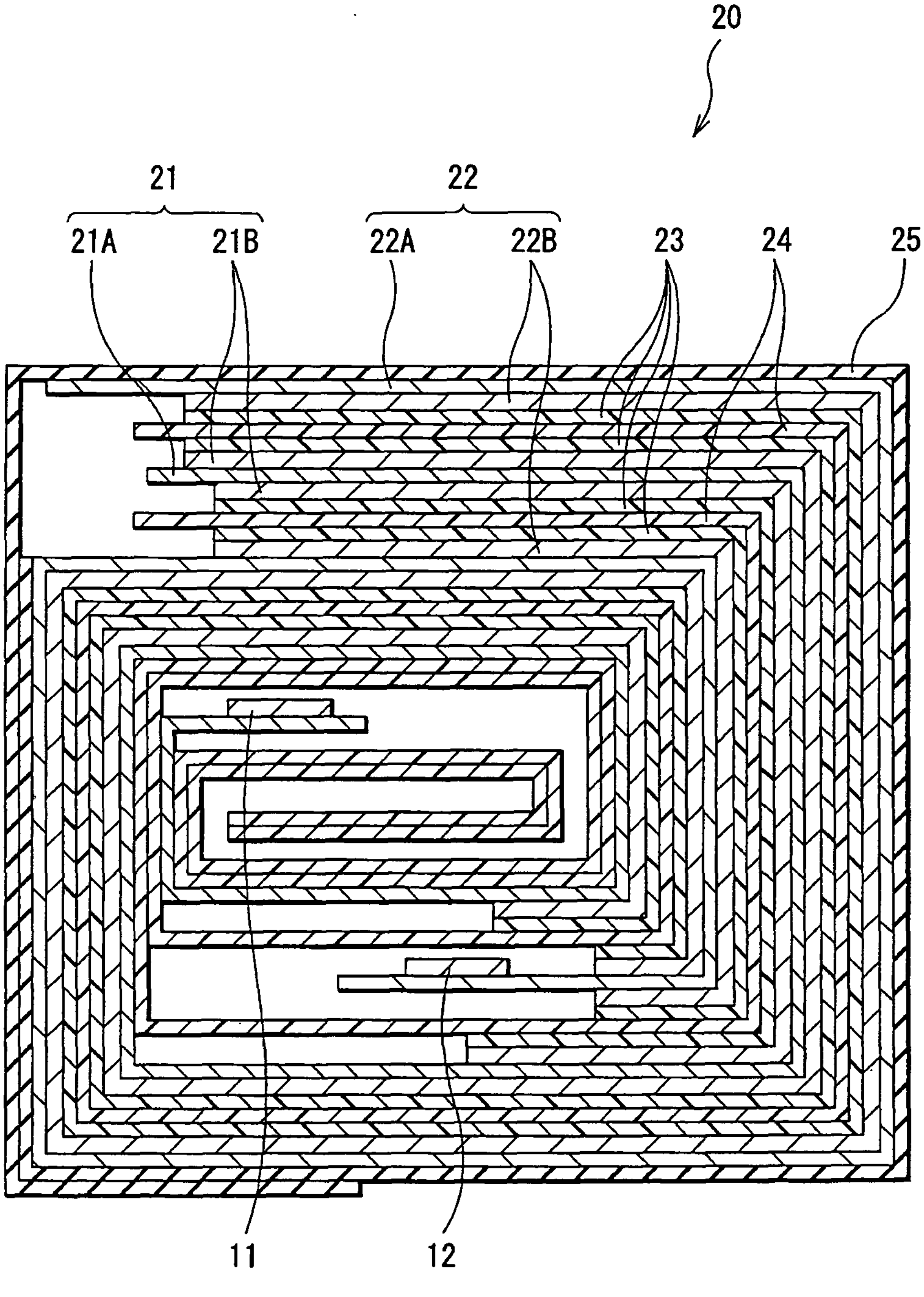


FIG. 2

European Patent Office

# EUROPEAN SEARCH REPORT

Application Number
EP 05 00 6915

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 562 513 B1 (M. TAKEUKI) 13 May 2003 (2003-05-13)<br>----- | | H01B1/06<br>H01M10/40<br>C08F2/44 |
| | | | TECHNICAL FIELDS SEARCHED (Int.Cl.7) |
| | | | C08F<br>H01B |

The present search report has been drawn up for all claims

| Place of search | Date of completion of the search | Examiner |
|---|---|---|
| The Hague | 27 June 2005 | Cauwenberg, C |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 00 6915

This annex lists the patent family members relating to the patent documents cited in the above-mentioned European search report. The members are as contained in the European Patent Office EDP file on
The European Patent Office is in no way liable for these particulars which are merely given for the purpose of information.

27-06-2005

| Patent document cited in search report | Publication date | Patent family member(s) | Publication date |
|---|---|---|---|
| US 6562513 B1 | 13-05-2003 | JP 2000086711 A | 28-03-2000 |

EPO FORM P0459

For more details about this annex : see Official Journal of the European Patent Office, No. 12/82